# EUROPÄISCHE PATENTANMELDUNG

(11) **EP 1 243 334 A1**
(43) Veröffentlichungstag der Anmeldung: **25.09.2002**
(21) Anmeldenummer: 02004914.4
(22) Anmeldetag: 05.03.2002
(51) Int. Cl.: B01J 33/00, B01J 35/00, B01J 37/02, C01B 3/32

(54) **Herstellung einer wasserabweisenden Katalysatorschicht auf einem keramischen oder metallischen Träger**

(30) Priorität: 24.03.2001 DE 10114646
(71) Anmelder: Ballard Power Systems AG, 73230 Kirchheim / Teck-Nabern (DE)
(72) Erfinder: Bachinger, Patrick, 73252 Lenningen (DE); Keppeler, Berthold, Dr., 73277 Owen (DE); Röser, Thomas, Dr., 73265 Dettingen / Teck (DE); Schmidt, Michael, 73235 Weilheim-Hepsisau (DE); Nowak, Dagmar, 71364 Winnenden-Hanweiler (DE)
(74) Vertreter: Kaufmann, Ursula Josefine, Dr.rer.nat. Dipl.-Phys.

(57) **Zusammenfassung**

Die Erfindung betrifft ein Verfahren zur Herstellung einer katalytischen Komponente auf einem metallischen oder keramischen Träger für ein Brennstoffzellensystem, bei dem die katalytische Komponente in mindestens einer Schicht auf den metallischen oder keramischen Träger aufgebracht wird. Diese mindestens eine Schicht enthält mindestens eine wasserabweisende Materialkomponente, die zusammen oder alternierend mit mindestens einer katalytisch wirksamen Materialkomponente in einem Verfahrensschritt aufgebracht wird. Alternativ kann die katalytische Schicht mit einer wasserabweisenden Deckschicht versehen werden. Die Erfindung betrifft ebenso eine auf einem metallischen oder keramischen Träger aufgebrachte katalytische Komponente die zusammen mit einer wasserabweisenden Komponente in einer Schicht vorliegt bzw. mit einer wasserabweisenden Deckschicht versehen wurde für einen chemischen Reaktor in einem Brennstoffzellensystem sowie deren Verwendung in einem solchen System.

## Beschreibung

Die Erfindung betrifft ein Verfahren zur Herstellung einer katalytischen Komponente gemäß dem Oberbegriff des Patentanspruchs 1 sowie eine katalytische Komponente und deren Verwendung in einer Brennstoffzelle.

In EP 102033 A1 ist ein Verfahren zur Herstellung eines Katalysators beschrieben, bei dem ein katalysatorhaltiges Material mit einem Lösungsmittel vermischt und auf einem über den Siedepunkt des Lösungsmittels erwärmten Substrat abgeschieden wird. Zur Herstellung einer Suspension wird ein Lösungsmittel und ein Pulver aus katalytisch aktivem Material und/oder aus katalytisch beschichteten Trägerpartikeln verwendet. Die Suspension wird in einer Spritzmasse in definierter Weise auf das Substrat aufgespritzt und eine katalysatorhaltige Schicht gebildet.

In DE 197 17 067 C2 ist ferner eine Reformierungsreaktoranlage beschrieben, die eine lange Lebensdauer des im Reformierungsreaktor befindlichen Katalysatormaterials gewährleistet. Dazu weist diese Anlage am Eintrittsbereich des ersten Reaktors ein Tropfenfängerelement, z.B. ein Metallvlies, auf. Beim Durchtritt des in den Reaktor einzuleitenden, zu reformierenden Gas-/Dampfgemisches aus Methanol und Wasser durch das Metallvlies werden jegliche eventuell gebildete Methanol- und Wassertropfen vom Metallvlies von einem Eindringen in den Reformierungsreaktor abgehalten. Damit werden Schädigungen des im Reaktor befindlichen Reformierungsmaterials ausgeschlossen.

Aus DE 197 21 751 C1 ist weiterhin eine Katalysatorschicht bekannt, die Dehnungsfugen aufweist, um ein Abplatzen oder Ablösen des Katalysators von der Trägeroberfläche während des Betriebs der Katalysatorschichten zu vermeiden.

Katalytische Schichten in einem Gaserzeugungssystem bzw. einem Brennstoffzellensystem sind beim Kaltstart bzw. Kaltstartabbruch häufig einer starken Kondensatbildung, die aus vorgeschalteten Komponenten herrührt, ausgesetzt. Dies bedingt eine Tröpfchenbildung oder die Ausbildung eines Flüssigkeitsfilmes, die sich bzw. der sich auf die katalytische Schicht ablegen bzw. ablegt. Damit wird die erneute Startbarkeit der katalytischen Schicht stark erschwert, da diese Schicht erst wieder trocknen muß. Da die Komponenten eines Gaserzeugungssystems bzw. eines Brennstoffzellensystems außerdem mechanischen oder thermischen Stress ausgesetzt sein können, führt dies mitunter zum Abplatzen bzw. zum Austrag des Katalysators aus der Schicht.

Aufgabe der Erfindung ist es daher, eine katalytische Komponente und ein Verfahren zur Herstellung einer katalytischen Komponente zur Verfügung zu stellen, die gegen eine Kondensatbildung und gegen mechanischen und/oder thermischen Stress weitgehend unempfindlich ist. Aufgabe der Erfindung ist es außerdem, deren Verwendung in einem Brennstoffzellensystem anzugeben.

Diese Aufgabe wird gelöst durch ein Verfahren mit den Merkmalen des Patentanspruchs 1, durch eine katalytische Komponente nach Anspruch 10 sowie deren Verwendung nach Anspruch 15. Die weiteren Unteransprüche enthalten vorteilhafte Ausgestaltungen der Erfindung.

Die Erfindung wird nun anhand der beigefügten Zeichnungen weiter beschrieben. In dieser zeigt
- Fig. 1: in schematischer Weise eine auf einen Träger durch Spülen, Streichen oder Drucken aufgebrachte katalytische Komponente und
- Fig. 2: schematisch eine auf einen Träger durch Sprühen oder Aufspritzen aufgebrachte katalytische Komponente und
- Fig. 3: schematisch eine auf einen Träger durch Sprühen, Spülen, Streichen oder Druckverfahren aufgebrachte Doppelschicht.

In dem erfindungsgemäßen Verfahren wird eine katalytische Komponente für einen chemischen Reaktor in einem Brennstoffzellensystem hergestellt, indem die katalytische Komponente in mindestens einer Schicht auf den metallischen oder keramischen Träger aufgebracht wird. Diese mindestens eine Schicht enthält mindestens eine wasserabweisende Materialkomponente, die zusammen oder alternierend mit mindestens einer katalytisch wirksamen Materialkomponente in einem oder mehreren Verfahrensschritten aufgebracht wird und wobei diese mindestens eine Schicht eine Porosität aufweist, dergestalt, daß sie für gas- und/oder dampfförmige Medien durchlässig ist.

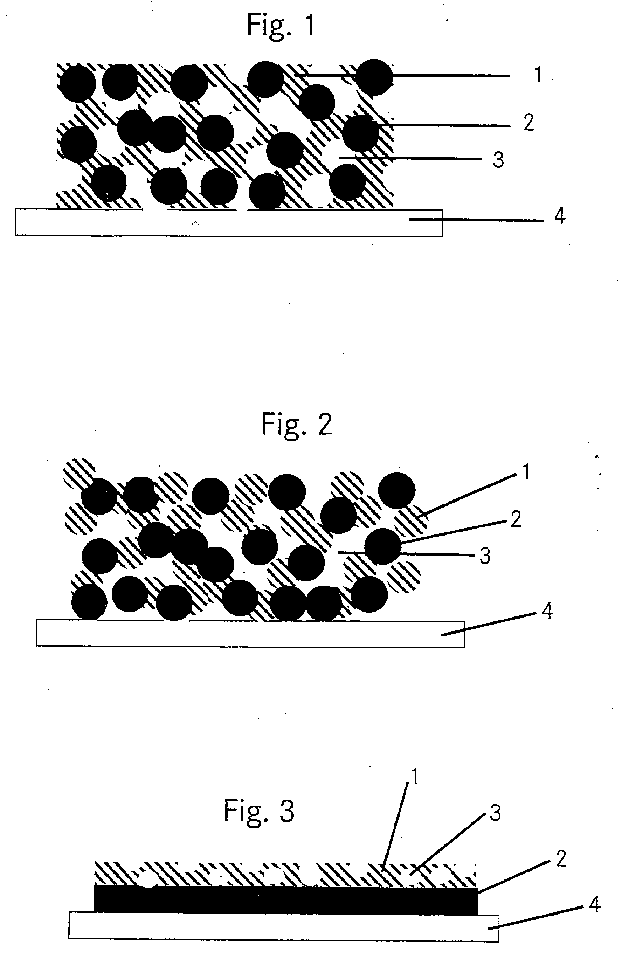

In einer erfindungsgemäßen Ausführungsform wird, wie in Figur 1 dargestellt, diese mindestens eine Schicht durch Aufbringen eines Stoffgemisches, das die mindestens eine katalytisch aktive (2) und die mindestens eine wasserabweisende (1) Materialkomponente enthält, aufgebracht. Hierbei werden die jeweiligen Komponenten, eventuell unter Zugabe eines Porenbildners, im Vorfeld vermischt und anschließend in an sich bekannter Weise durch ein Spül-, Streich- oder Druckverfahren auf den metallischen oder keramischen Träger (4) aufgebracht, der beheizt sein kann. Die Konzentrationsprofile der wasserabweisenden (1) und der katalytisch wirksamen (2) Materialkomponente sind in der mindestens einen Schicht in Richtung der Schichtdicke gradientenfrei, d.h. die Konzentrationen der beiden Materialien sind in Richtung der Schichtdicke in der mindestens einen Schicht im wesentlichen konstant. Diese Mischung kann auch in Form von Pellets oder Extrudaten als Schüttgut in ein Brennstoffzellensystem, z.B. in einen Reformer, eingebracht werden. Als Porenbildner kommen beispielsweise leicht zersetzliche organische Moleküle, Cellulose, Carbonate, Harnstoff oder Treibgase in Frage. Die so durch das Spül-, Streich- oder Druckverfahren auf den metallischen oder keramischen Träger aufgebrachte Schicht wird anschließend calciniert. Beim Calciniervorgang zersetzen sich die als Porenbildner eingebrachten Substanzen, und es bildet sich ein System von verbundenen Poren mit Durchmessern < 10 µm.

Wassertropfen haben im allgemeinen einen Durchmesser > 100 µm und können aufgrund der wasserabweisenden Eigenschaften der Oberfläche somit nicht ohne Anlegen einer zusätzlichen Kraft, d.h. eines Druckes, durch die poröse Schicht dringen. Ein Gasaustausch ist dagegen durch die Poren zu der katalytisch wirksamen Materialkomponente(2) möglich. Somit ist die Zuführung von gas- und/oder dampfförmigen Edukten zu und die Abführung von gas- und/oder dampfförmigen Produkten von der katalytischen Schicht möglich. Der physikalische Effekt - die Durchlässigkeit für gas- und/oder dampfförmige Medien, aber die Undurchlässigkeit für flüssiges Wasser - hilft in vorteilhafter Weise eine nahezu vollständige Belegung des Katalysators mit Tröpfchen und/oder einem Flüssigkeitsfilm wie z.B. durch Kondensation von Wasserdampf zu vermeiden und damit einer Aktivitätsverminderung oder Desaktivierung des Katalysators vorzubeugen und ein Funktionieren des Feuchtehaushalts der Schicht trotzdem zu gewährleisten.

In einer anderen Ausgestaltung wird, wie in Fig. 2 dargestellt, diese mindestens eine Schicht auch durch alternierendes Aufsprühen der katalytisch wirkenden Materialkomponente (2) und der wasserabweisenden Materialkomponente (1) mit einem gradientenfreien Konzentrationsprofil in Richtung der Schichtdicke hergestellt. Hierzu werden die einzelnen Sprühköpfe, die mit der jeweiligen Materialkomponente beschickt werden, zeitversetzt angesteuert. In einer weiteren Ausführung des erfindungsgemäßen Verfahrens, ebenfalls durch Fig. 2 dargestellt, wird diese mindestens eine Schicht durch gleichzeitiges Aufbringen der katalytisch wirksamen (2) Materialkomponente und der wasserabweisenden Materialkomponente (1) mit einem gradientenfreien Konzentrationsprofil in Richtung der Schichtdicke hergestellt. Bei dieser Ausführung werden die einzelnen Sprühköpfe, die mit der jeweiligen Materialkomponente beschickt werden, gleichzeitig angesteuert. Der metallische oder keramische Träger (4) hat beim Sprühvorgang vorteilhafterweise eine Temperatur von etwa 100 bis 250°C, besonders bevorzugt zwischen etwa 180 und 200°C. Durch die erhöhte Temperatur des beschichteten Trägers verdampft beim Auftreffen des Sprühnebels der in den Tröpfchen enthaltene Lösungsmittelanteil schlagartig, so daß die zu beschichtende Suspension, hergestellt aus wasserabweisender Materialkomponente (1) und Lösungsmittel, auf dem metallischen oder keramischen Träger (4) nicht zerfließt, sondern sich in nahezu kugelförmiger Weise auf der Oberfläche ablegt. Durch die Aufbringung der wasserabweisenden Materialkomponente (1) in Form kleiner Kügelchen mit Durchmessern von etwa < 1 µm bilden sich zwischen den Kügelchen Poren (3), deren Durchmesser in derselben Größenordnung liegen wie die Durchmesser der Kügelchen. Wie beim vorangegangenen Verfahren geschildert, verhindert auch hier die wasserabweisende Oberfläche der engen Poren ein Eindringen von flüssigem Wasser. Die wasserabweisende Materialkomponentenschicht ist somit im Brennstoffzellenbetrieb vorteilhafterweise durchlässig für Gase, weist jedoch beispielsweise Wassertröpfchen ab. Hiermit wird gewährleistet, daß der Katalysator nicht durch Kondensatbildung an kalten Stellen im Brennstoffzellensystem bzw. Gaserzeugungssystem in seiner Reaktivität gehindert ist, sondern vor allem beim Kaltstart weitestgehend zur Verfügung steht.

Zum anderen verhindert der Verbund der katalytischen mit der wasserabweisenden Materialkomponente durch Verkleben oder Vernetzen vorteilhafterweise ein Abplatzen oder den Austrag des Katalysatormaterials oder vermindert diese Effekte weitgehend.

Wie in Fig. 3 gezeigt, ist auch ein Verfahren zur Herstellung einer katalytischen Komponente denkbar, in dem zunächst eine die katalytisch wirksame Materialkomponente enthaltende Unterschicht und darauf eine die wasserabweisende Materialkomponente enthaltende Oberschicht auf einen Träger aufgebracht wird. Sowohl die die katalytische Materialkomponente (2) enthaltende untere Schicht als auch die die wasserabweisende Materialkomponente (1) enthaltende obere Schicht können dabei durch Aufsprühen gemäß EP 102 033 A1 erzeugt werden. Wie oben beschrieben bilden sich durch das spezielle Sprühverfahren Poren. Die in Figur 3 beschriebene Doppelschicht kann ebenso durch Spül-, Streich- oder Druckverfahren aufgebracht werden. Die oben geschilderten physikalischen Effekte finden auch bei dem hier beschriebenen Herstellverfahren Anwendung.

Als metallische Träger können Edelstahl oder edelstahlhaltige Materialien, Aluminium oder aluminiumhaltige Materialien, Kupfer oder kupferhaltige Materialien, als keramische Träger Materialien wie z.B. γ-Aluminiumoxid, Zeolithe, Zinkoxid, Ca-Oxid, Mg-Oxid, Zr-Oxid, Ti-Oxid, Ce-Oxid Verwendung finden. Die Träger selbst können beispielsweise als glatte, gewellte, gezackte, wabenförmige oder sonstwie geformte Körper vorliegen.

Die als Schicht auf einen metallischen oder keramischen Träger aufgebrachte katalytisch wirksame Komponente enthält mindestens eine Katalysatormaterialkomponente und/oder eine katalysatorhaltige Materialkomponente und mindestens eine wasserabweisende Materialkomponente, wobei die Konzentration dieser beiden Materialien in Richtung der Schichtdicke im wesentlichen konstant ist.

Als katalytisch aktives Material werden bevorzugt Metalle aus den Nebengruppen des Periodensystems Ib, IIb, VIIb und/oder VIIIb ausgewählt, wobei zusätzlich auch Substanzen enthalten sein können, denen Elemente aus anderen Gruppen des Periodensystems zugrunde liegen. Die mindestens eine Katalysatormaterialkomponente und/oder katalysatorhaltige Materialkomponente liegt bevorzugt geträgert vor. Entsprechend dem Stand der Technik gibt es eine Reihe von Trägermaterialien für Katalysatoren wie beispielsweise Keramik, Kohlenstoff, Kunststoff, Metall etc. Es eignen sich besonders poröse Feststoffe, auf dessen Oberfläche katalytisch wirksames Material abgeschieden wird. Besonders bevorzugt werden als Trägermaterialien keramische Werkstoffe wie z.B. Zeolithe, Al₂O₃, SiO₂, ZrO₂, CeO₂ und/oder Mischungen davon eingesetzt.

Das mindestens eine wasserabweisende Material enthält bevorzugt Silicone oder siliconhaltige Materialien, fluorierte Polymere wie z.B. Polytetrafluorethylen oder polytetrafluorethylenhaltige Materialien, Epoxidharz oder epoxidharzhaltige Materialien, Phenolharz oder phenolharzhaltige Materialien, Acrylharz oder acrylharzhaltige Materialien, PUR-Klebstoffmaterialien oder PUR-klebstoffhaltige Materialien oder Kunstharz/Schellackgemische oder kunstharzhaltige/schellackhaltige Gemische. Im Bereich der fluorierten Polymere eignet sich besonders Polytetrafluorethylen (PTFE) als wasserabweisende Komponente und Bindemittel für Katalysatoren. Im Bereich der Silicone finden besonders bevorzugt Siliconharze Anwendung, die eine hohe Dauerwärmebeständigkeit im Einsatzbereich aufweisen müssen. Diese Einsatztemperaturen liegen im Bereich zwischen etwa 30°C bis 650°C, bevorzugt im Bereich zwischen etwa 50°C bis 300°C. Als ein weiterer Vorteil zeigt sich, daß bei der Verwendung von Edelmetall als katalytisch aktive Materialkomponente in Verbindung mit Siliconen als wasserabweisende Materialkomponente keine Vergiftungserscheinungen durch Katalysatorgifte auftreten, wie dies z.B. bei der Verwendung von Kupfer als katalytische Komponente der Fall ist.

Es ist außerdem äußerst vorteilhaft, wenn die Schicht, die die wasserabweisende Materialkomponente enthält, eine durch den chemischen Stoff selbst und/oder durch das Auftragsverfahren herbeigeführte (bedingte) Elastizität aufweist, die ein Abplatzen oder den Austrag von Katalysator aus der Schicht verhindert oder diese Effekte weitgehend vermindert. Durch die Vernetzung der wasserabweisenden Materialkomponente wirkt diese ferner als ein Bindemittel für den Katalysator. Der Anteil an wasserabweisender Materialkomponente in Bezug auf die katalytisch wirksame Materialkomponente und/oder katalysatorhaltige Materialkomponente beträgt 1 bis 50 Gewichtsprozent, bevorzugt 5 bis 25 Gewichtsprozent.

Ausführungsbeispiele 1 - 3 für die Herstellung einer festhaftenden, wasserabweisenden Katalysatorschicht:

### Beispiel 1

Auf einen keramischen oder metallischen Träger wird, wie in EP 102033 ausgeführt, eine katalytisch aktive Schicht durch Sprühbeschichtung gebildet. Die dazu notwendige Katalysatorsuspension besteht aus mindestens einem katalytisch aktiven Material, einem Binder und Wasser. Als Binder kommen beispielsweise Stoffe wie Al₂O₃, SiO₂, ZrO₂, CeO₂ und/oder Mischungen davon in Frage. Das Massenverhältnis von Binder zu Katalysator liegt im Bereich von 0,1:100 bis 50:100, bevorzugt im Bereich von 1:100 bis 30:100. Das Massenverhältnis von Feststoff (Katalysator, Binder) zu Wasser liegt im Bereich von 10:90 bis 50:50. Als Sprühverfahren kann jedes beliebige aus der Lackiertechnik bekannte Verfahren herangezogen werden. Die Schichtdicke der katalytisch aktiven Schicht liegt im Bereich von etwa 10 bis 40 µm.

Über diese Katalysator- oder katalysatorhaltige Schicht wird nun eine wasserabweisende Deckschicht aufgebracht. Dazu wird aus Silicon (z.B. dem Hochtemperatursilicon Pactan der Fa. Bauchemie Heidelberg) und dem Lösungsmittel Hexan im Verhältnis 1:9 eine Suspension hergestellt. Diese Suspension wird mit einem beliebigen aus der Lackiertechnik bekannten Verfahren auf den bereits mit Katalysator beschichteten Träger gesprüht. Der mit Katalysator beschichtete Träger weist beim Sprühvorgang vorteilhafterweise eine Temperatur von 100 bis 250°C auf. Durch die erhöhte Temperatur des Trägers verdampft beim Auftreffen des Sprühnebels der in den Tröpfchen enthaltene Lösungsmittelanteil schlagartig, so daß die zu beschichtende Suspension auf der zu beschichtenden Oberfläche nicht zerfließt, sondern sich nahezu kugelförmige Siliconablagerungen auf der Oberfläche bilden. Diese Siliconschicht ist in einem Temperaturbereich bis etwa 150°C im Dauergebrauch eines Brennstoffzellensystems ohne Zersetzung einsetzbar.

### Beispiel 2

Auf einem keramischen oder metallischen Träger wird wie in Beispiel 1 beschrieben eine katalytisch aktive Schicht gebildet. Über diese Katalysator- oder katalysatorhaltige Schicht wird nun eine wasserabweisende Deckschicht aufgebracht. Aus Teflon 30 B (60%ige wässrige Teflonsuspension der Fa. DuPont) und Wasser wird eine verdünnte Teflonsuspension hergestellt. Das Verhältnis von Teflon 30 B zu Wasser liegt im Bereich von 1:10 bis 10:1, bevorzugt im Bereich von 1:5 bis 10:1. Diese Suspension wird mittels Sprühtechnik auf die Katalysatorschicht aufgebracht. Der mit Katalysator beschichtete Träger weist ebenfalls beim Sprühvorgang vorteilhafterweise eine Temperatur von 100 bis 250°C, besonders bevorzugt eine Temperatur zwischen 180 und 200°C auf. Durch die in Beispiel 1 beschriebenen Effekte wird ein Zerfließen der Teflonsuspension nach dem Aufsprühen verhindert und es ensteht eine Teflonschicht mit Poren, deren Durchmesser ebenfalls im Bereich < 1µm liegen. Durch die stark wasserabweisenden Eigenschaften dieser Schicht bleiben die Wassertropfen auf der Schicht stehen, ohne in die unter der Teflonschicht liegende stark hydrophile Katalysatorschicht einzudringen. Die Einsatztemperaturen der Schicht im Dauergebrauch liegen in einem Temperaturbereich von bis zu 300°C. Die auf diese Weise hergestellte Doppelschicht aus katalytisch aktiver Schicht (katalytisch aktives Material: etwa **10 mg** Platin) und wasserabweisender Schicht (wasserabweisende Materialkomponente: Teflon) wird einem katalytischen Test unterworfen, bei dem ein Reformatgas aus der Methanolreformierung mit einem hohen Anteil an H₂ und weiteren Anteilen in geringerem Umfang von CO₂, CO, O₂, H₂O diese Doppelschicht überströmt. Bei einer Reaktionstemperatur von 240°C und einem Wasserstoffvolumenstrom von 0,25 Nm³/h wird ein CO-Umsatz von etwa 60% erreicht. Nach mehr als 15 Betriebsstunden im Dauergebrauch konnte keine Desaktivierung des Katalysators beobachtete werden; die Schichtkombination zeigte außerdem nach dem katalytischen Test die gleichen hydrophoben Eigenschaften wie zuvor. Eine derartige erfindungsgemäße Doppelschicht ist aufgrund ihrer katalytischen Aktivität in vorteilhafter Weise als Katalysator für die selektive CO-Oxidation in einem Brennstoffzellensystem zur Entfernung von CO aus wasserstoffhaltigem Reformat geeignet. Die genannte Doppelschicht ist außerdem für jegliche Reformatzusammensetzung, auch aus anderen Kraftstoffen wie beispielsweise Benzin, Diesel, Erdgas, Ethanol, hervorragend geeignet.

### Beispiel 3

Auf einem keramischen oder metallischen Träger wird wie in Beispiel 1 beschrieben eine katalytisch aktive Schicht durch Sprühbeschichtung gebildet. Über diese katalytisch aktive Schicht wird dann eine wasserabweisende Deckschicht aufgebracht. Dazu wird aus Siliconharz (z.B. dem Hochtemperatur-Siliconharz SILRES M50E der Fa. Wacker) und dem Lösungsmittel Hexan eine Suspension hergestellt, die wie in Beispielen 1 und 2 beschrieben auf die katalytisch aktive Schicht aufgesprüht wird. Die Einsatztemperaturen dieser Doppelschicht im Dauergebrauch liegen in einem Temperaturbereich bis etwa 350°C.

Alle genannten Beispiele können auch mittels der in den Ansprüchen 1 bis 9 genannten Verfahren hergestellt werden. Die nach diesen Verfahren hergestellten Schichten sind besonders homogen aufgebaut und somit besonders unempfindlich gegen Kondensatbildung bzw. gegen mechanischen und/oder thermischen Stress am Einsatzort in einem chemischen Reaktor eines Brennstoffzellensystems.

Die erfindungsgemäße Vorrichtung kann nicht nur in einer Wasserstoff-, sondern ebenso in reformatbetriebenen oder Direkt-Methanol-Brennstoffzellensystemen eingesetzt werden. Die erfinderische Vorrichtung eignet sich in besonderer Weise zur Verwendung in einem katalytischen Brenner, bei der selektiven CO-Oxidation, in einem Reformer oder einem katalytisch beheizten Wärmetauscher in einem Brennstoffzellensystem.

## Patentansprüche

1. Verfahren zur Herstellung einer katalytischen Komponente auf einem metallischen oder keramischen Träger für einen chemischen Reaktor in einem Brennstoffzellensystem, bei dem die katalytische Komponente in mindestens einer Schicht auf den metallischen oder keramischen Träger aufgebracht wird, wobei diese mindestens eine Schicht mindestens eine wasserabweisende Materialkomponente enthält, die zusammen oder alternierend mit mindestens einer katalytisch wirksamen Materialkomponente in einem Verfahrensschritt aufgebracht wird und wobei diese mindestens eine Schicht eine Porosität aufweist, dergestalt, daß sie für gas- und/oder dampfförmige Medien durchlässig ist.

2. Verfahren nach Anspruch 1, wobei die mindestens eine Schicht durch Aufbringen eines Stoffgemisches, das die katalytisch aktive und die wasserabweisende Materialkomponente enthält, hergestellt wird.

3. Verfahren nach Anspruch 1, wobei die mindestens eine Schicht durch alternierendes Aufbringen der katalytisch wirksamen Materialkomponente und der wasserabweisenden Materialkomponente hergestellt wird.

4. Verfahren nach Anspruch 1, wobei die mindestens eine Schicht durch gleichzeitiges Aufbringen der katalytischen Materialkomponente und der wasserabweisenden Materialkomponente hergestellt wird.

5. Verfahren nach einem der Ansprüche 2 bis 4, wobei die mindestens eine Schicht derart aufgebracht wird, daß die Konzentration dieser beiden Materialien in Richtung der Schichtdicke im wesentlichen konstant ist.

6. Verfahren nach Anspruch 3 oder 4, wobei die mindestens eine Schicht durch Sprühen oder Aufspritzen aufgebracht wird.

7. Verfahren nach Anspruch 1 oder 2, wobei die mindestens eine Schicht durch Streichen, Drucken oder Spülen aufgebracht wird.

8. Verfahren nach einem der Ansprüche 1 bis 7, wobei der Träger während des Aufbringens der Schicht beheizt wird.

9. Verfahren nach Anspruch 2, wobei dem Stoffgemisch Porenbildner beigemischt sind.

10. Auf einen metallischen oder keramischen Träger als Schicht aufgebrachte katalytische Komponente für einen chemischen Reaktor in einem Brennstoffzellensystem, wobei diese mindestens eine Schicht mindestens eine Katalysatormaterialkomponente und/oder katalysatorhaltige Materialkomponente und mindestens eine wasserabweisende Materialkomponente enthält, wobei die Konzentration dieser beiden Materialien in Richtung der Schichtdicke im wesentlichen konstant ist und wobei diese mindestens eine Schicht eine Porosität aufweist, dergestalt, daß sie für gas- und/oder dampfförmige Medien durchlässig ist.

11. Vorrichtung nach Anspruch 10, wobei das mindestens eine Katalysatormaterial und/oder katalysatorhaltige Material bevorzugt geträgert vorliegt.

12. Vorrichtung nach Anspruch 10, wobei die mindestens eine wasserabweisende Materialkomponente bevorzugt Silicon oder siliconhaltige Materialien, fluorierte Polymere oder fluorierte Polymere enthaltende Materialien, Epoxidharz oder epoxidharzhaltige Materialien, Phenolharz oder phenolharzhaltige Materialien, Acrylharz oder acrylharzhaltige Materialien, PUR-Klebstoffmaterialien oder PUR-klebstoffhaltige Materialien oder Kunstharz/Schellackgemische oder kunstharzhaltige/ schellackhaltige Gemische enthält.

13. Vorrichtung nach einem der Ansprüche 10 bis 12, wobei der Anteil an wasserabweisender Materialkomponente in Bezug auf die Katalysatormaterialkomponente und/oder katalysatorhaltige Materialkomponente 1 bis 50 Gewichtsprozent, bevorzugt 5 bis 25 Gewichtsprozent, beträgt.

14. Vorrichtung nach Anspruch 10, wobei der metallische Träger Edelstahl oder edelstahlhaltige Materialien, Aluminium oder aluminiumhaltige Materialien oder Kupfer oder kupferhaltige Materialien enthält.

15. Verwendung der Vorrichtung nach einem der Ansprüche 10 bis 14, in einem katalytischen Brenner, bei der selektiven CO-Oxidation, in einem Reformer, einem katalytisch beheizten Wärmetauscher eines Brennstoffzellensystems.
